# EUROPEAN PATENT SPECIFICATION

(11) **EP 2 486 801 B1**
(45) Date of publication and mention of the grant of the patent: **26.11.2014**
(21) Application number: 12160176.9
(22) Date of filing: 19.05.2011
(51) Int. Cl.: A22C 7/00

(54) **Compression grilles**
Kompressionsgittern
Grilles de compression

(30) Priority: 10.02.2011 IT VR20110026
(43) Date of publication of application: 15.08.2012
(62) Divisional of application: 11166672.3
(73) Proprietor: INOX Meccanica S.R.L., 46044 Goito, Frazione Solarolo MN (IT)
(72) Inventor: Bolzacchini, Giovanni, 46044 Goito, Frazione Solarolo MN (IT)
(74) Representative: Modiano, Micaela Nadia

(56) References cited:
- US-A- 3 548 741
- US-A- 4 386 451

## Description

The present invention relates to a pair of compression grilles for food products.

According to a production technique that is currently used, the food products to be seasoned or cooked, such as, for example, boned meat for the production of cooked meats, are arranged between a pair of grilles, which face each other and are mutually connected, along two opposite sides thereof, by means of springs, so as to be able to exert a compression action on the food product in the seasoning or cooking phase.

Currently, for performing the insertion of the food product to be seasoned or cooked between the two grilles, the springs arranged on one side of the grilles are detached from one of the two grilles, so as to be able to arrange the grilles mutually side-by-side on a supporting surface.

The food products are then arranged on the grille to which the springs are still attached.

Then, the other grille is placed over the products and, by means of a press that acts above the supporting surface, it is brought closer to the underlying grille upon which the products have been arranged, thus causing the compression of the products.

Lastly, an operator manually reattaches the springs to the grille that has been laid over the products.

In order to do this, the operator grips, by means of a hook, each individual spring that he or she has to attach and exerts the necessary traction thereon to bring the free end of the spring into engagement with the overlying grille.

At this point, the press is raised and the two grilles, with the products contained between them, are hung on special racks, for the time required for the seasoning of the food products, or they are sent to special apparatuses to carry out the cooking of the food products inserted between them.

As can easily be grasped, this way of working involves a considerable expenditure of time and labor for the insertion of the products between the grilles, as well as being quite dangerous for the operator due to the use of the hook.

Currently, the extraction of the food products, once seasoned, from the grilles also involves a series of laborious manual steps to unhook the springs and, as a result, to free the food products from the grip of the grilles.

US 3 548 741 A discloses a spring-biased meat mold assembly, which is comprised of a pair of grid plates interconnected by coil springs, wherein a meat product is positioned between the spring-biased grid plates and paced under compressive force by the springs. A loading apparatus is provided for loading the meat product between the spring-biased grid plates. The loading apparatus comprises an upper loading frame that is releasably clasped on an upper grid plate. The upper loading frame is attached to a collar that is slidably mounted on a vertical stancion by means of compressed air, to space the upper grid plate away from the lower grid plate for loading the meat product between the spaced grid plates.

US 4 386 451 discloses a meat product compressing device, comprising a plurality of baskets containing the meat products. The baskets are stacked on top of one another and the weight of the meat in the baskets causes the meat products to be compressed to a predetermined thickness. Each basket comprises a grill shaped bottom supporting a meat product, and an open top formed of a circumferential rod element. The bottom grill is connected to the upper circumferential rod element by means of appropriately welded V-shaped lateral elements. When the baskets are stacked, the bottom grill of a basket rests on the meat product contained in the basket arranged below.

The aim of the present invention is to solve the above mentioned problems with a pair of compression grilles according to claim 1.

Further characteristics and advantages of the invention will become better apparent from the description of a machine designed to work with a pair of compression grilles according to claim 1, illustrated by way of non-limiting example in the accompanying drawings wherein:
Figure 1 is an end elevation view a machine in a first operation step, in which a pair of grilles according to claim 1 are arranged in the corresponding positioning region and food products are loaded in grip means placed in a loading position;
Figure 2 is a perspective view of the machine in the first operation step;
Figure 3 is a perspective view from another angle of the machine in the first operation step;
Figure 4 is a sectional view taken along the line IV-IV in Figure 1;

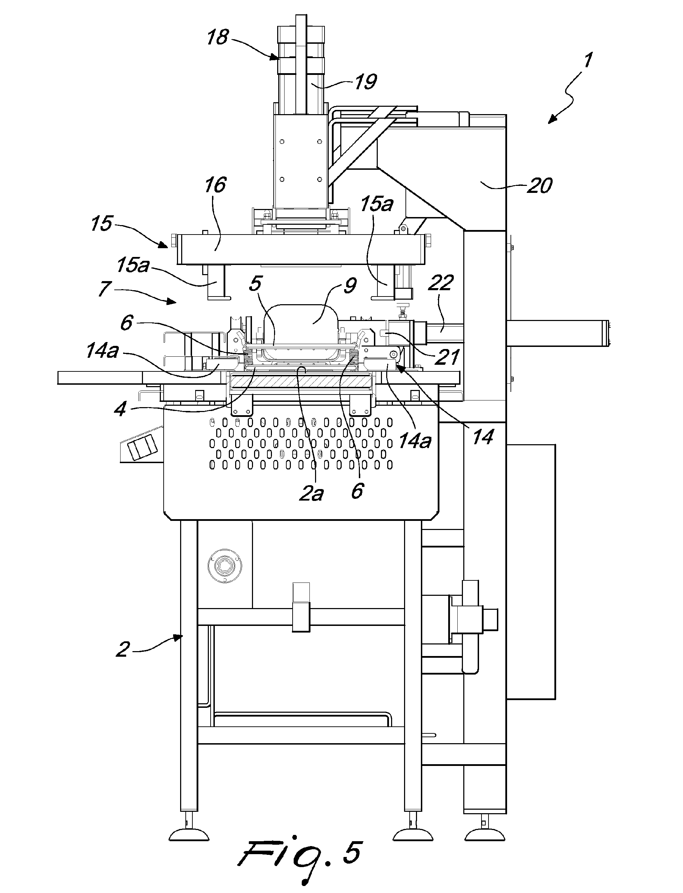

Figure 5 is a sectional view taken along the line V-V in Figure 1;
Figure 6 is a sectional view similar to Figure 5, but showing a second operation step of the machine in which the first hooks are moved to an advanced working condition so as to lock one of the grilles in position;
Figure 7 is a perspective view of the machine in a third operation step, in which second hooks are in an advanced condition of engagement to execute the locking of the other grille in position;
Figure 8 is a perspective view from another angle of the machine in the third operation step;
Figure 9 is an end elevation view of the machine in the third operation step;
Figure 10 is a sectional view taken along the line X-X in Figure 9;
Figure 11 is a sectional view taken along the line XI-XI in Figure 10;
Figure 12 is a perspective view showing a fourth operation step of the machine in which the grilles are moved to a spaced condition and the grip means of the food products are in the insertion position between the grilles;
Figure 13 is an end elevation view of the machine in the fourth operation step;
Figure 14 is a sectional view taken along the line XIV-XIV;
Figure 15 is a perspective view of the machine in a fifth operation step, in which retention bars are moved to the active position;
Figure 16 is a perspective view of the machine in the fifth operation step;
Figure 17 is an end elevation view of the machine in the fifth operation step;
Figure 18 is a sectional view taken along the line XVIII- XVIII, with some parts omitted for ease of drawing;
Figure 19 is a sectional view taken along the line XIX-XIX;
Figure 20 is a perspective view of the machine in a sixth operation step, in which the grip means are moved to a first intermediate position between their insertion position and their loading position;
Figure 21 is a perspective view of the machine in a seventh operation step, in which the grip means are moved to a second intermediate position between their insertion position and their loading position;
Figure 22 is a perspective view of the machine showing an eighth operation step, in which the grip means are returned to the loading position and the food products are inserted between the grilles in the spaced condition;
Figure 23 is a perspective view of the machine in a ninth operation step, in which the first hooks are brought back to the retracted rest condition and the second hooks to the retracted disengagement condition;

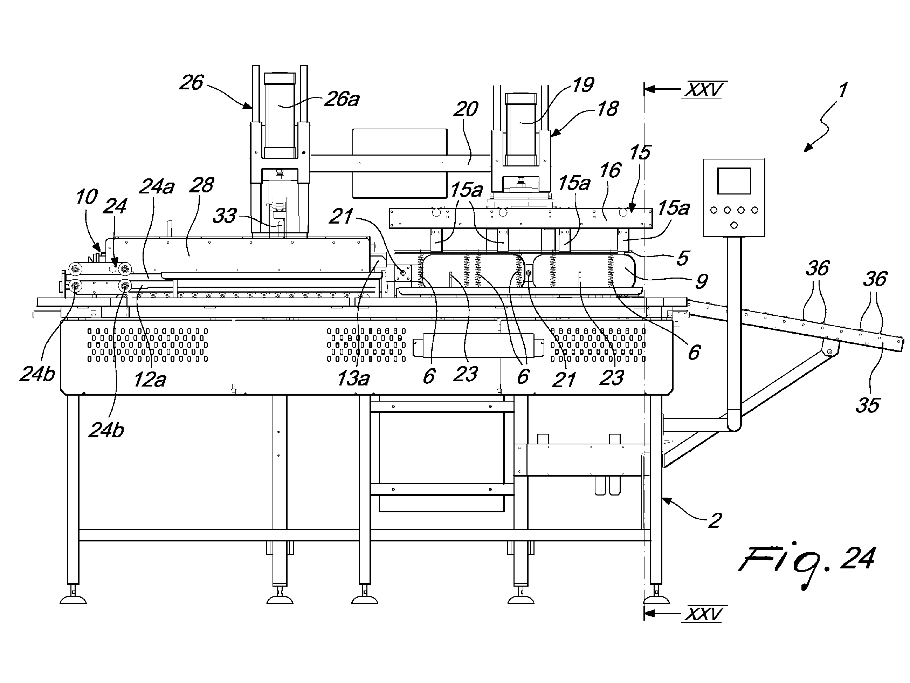

Figure 24 is an end elevation view of the machine in the ninth operation step;
Figure 25 is a sectional view taken along the line XXV-XXV in Figure 24, with some parts omitted for simplicity;
Figure 26 is a perspective view of a tenth operation step of the machine in which the grilles with the food products inserted between them are pushed downstream of the positioning region;
Figure 27 is an end elevation view of the machine in the tenth operation step;
Figure 28 is a plan view from above of a supporting surface for one of the grilles;
Figure 29 is a sectional view taken along the line XXIX-XXIX in Figure 28;

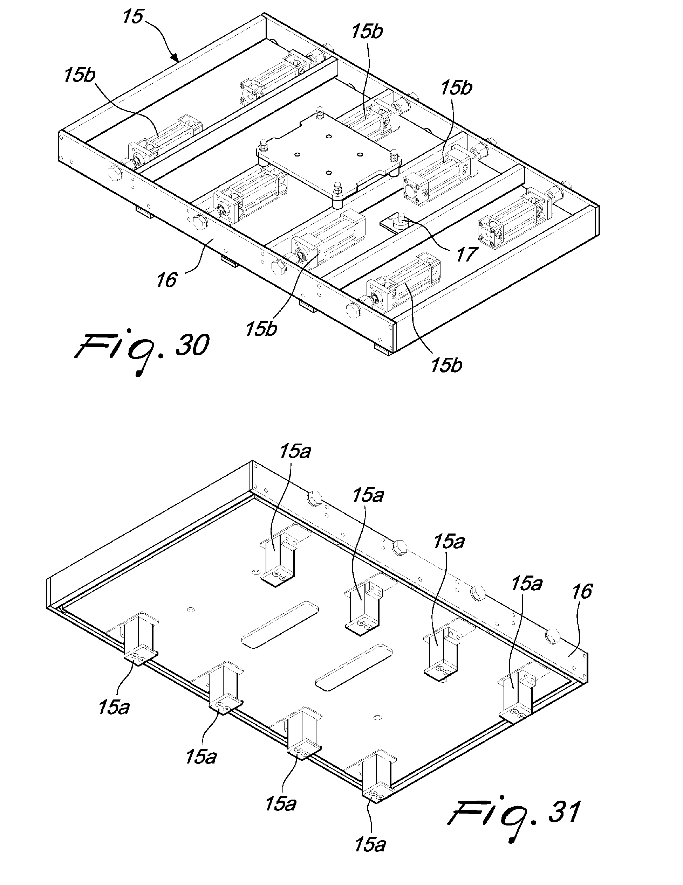

Figure 30 is a perspective view from above of a supporting frame for the second hooks;
Figure 31 is a perspective view from below of the supporting frame in Figure 30;
Figure 32 is a schematic perspective view of a lower shell and an upper shell in the raised condition, for showing the centering pins and the corresponding locator sleeves;
Figure 33 is an end elevation view of the lower shell and of the upper shell in the raised condition.

With reference to the figures, the machine for inserting or removing food products between a pair of compression grilles, generally designated with the reference numeral 1, comprises a base frame 2 that defines at least one positioning region 3 for at least one pair of grilles 4 and 5, which are arranged facing each other and are mutually connected by elastic compression means, which are constituted, for example, by a plurality of springs 6, distributed along the periphery of the grilles 4 and 5.

The base frame 2 supports mutual spacing means 7 of the two grilles 4, 5, which make it possible to move the grilles 4 and 5 from a closer condition to a spaced condition, in contrast with the above-mentioned elastic compression means.

Advantageously, the machine can be, moreover, provided with automatic insertion means 8, which make it possible to insert one or more food products 9 to be seasoned or cooked between the two grilles 4 and 5 which were previously moved to their spaced condition by the mutual spacing means 7.

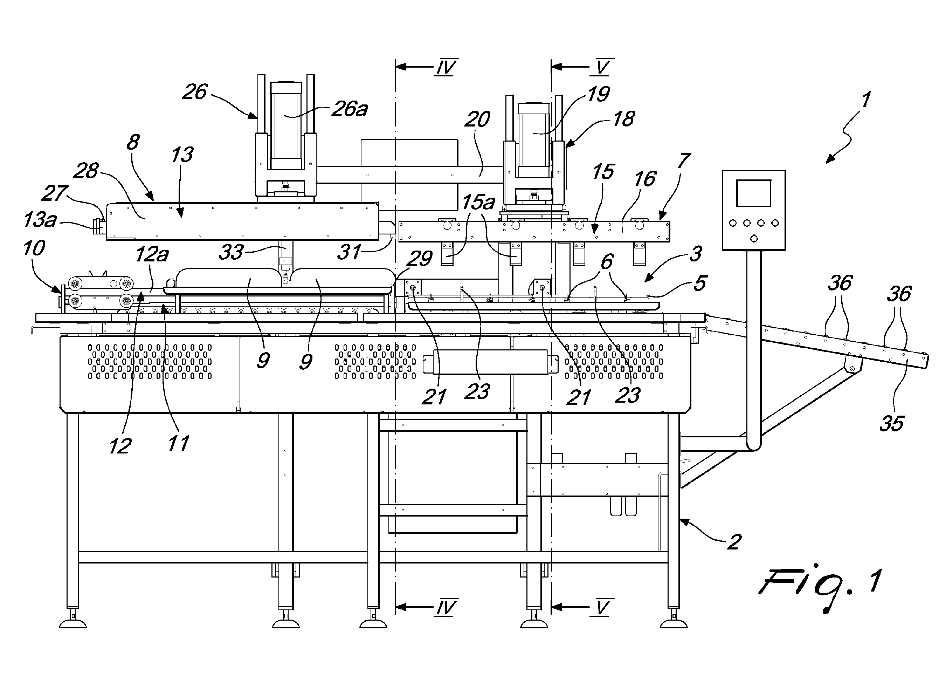

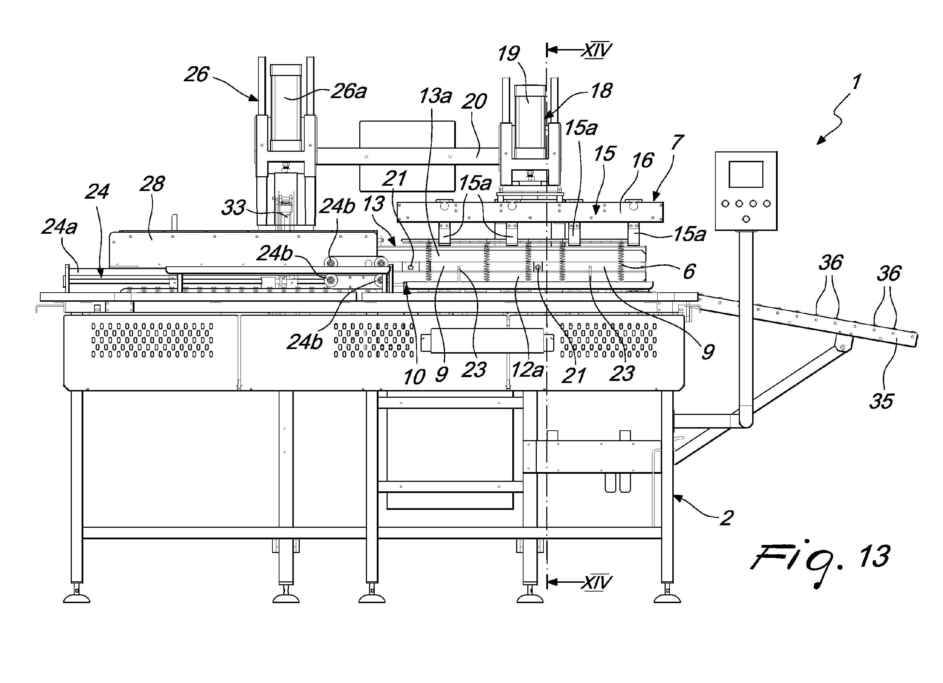

In particular, the automatic insertion means 8 comprise, conveniently, means 10 of gripping the food products 9 that have to be inserted between the grilles 4 and 5 and means 11 for the translational motion of these grip means 10 between a loading position, shown, for example, in Figure 1, and an insertion position, shown, for example, in Figure 13.

In particular, in their loading position, the grip means 10 are arranged laterally to the positioning region 3 of the grilles 4 and 5, in order to enable the loading thereon of the food products 9 that have to be inserted between the grilles 4 and 5, while, in the insertion position, the grip means 10, with the food products 9 loaded thereon, are inserted between the grilles 4 and 5 which were previously moved to the spaced condition by the mutual spacing means 7.

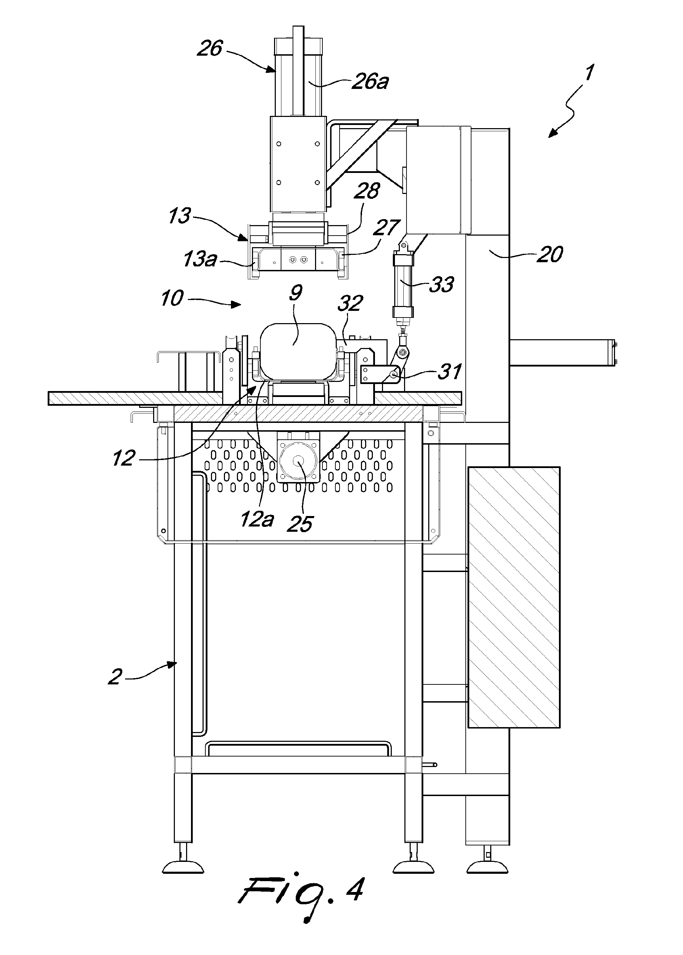

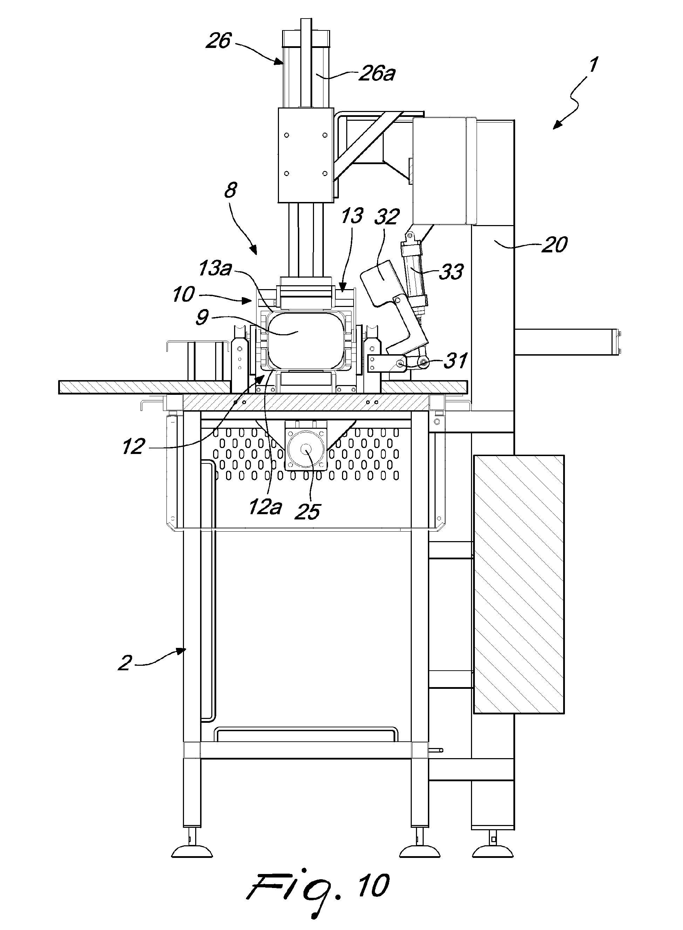

Preferably, the grip means 10 comprise a pair of fastening elements 12 and 13, which can move between a mutually spaced position, shown, in particular, in Figure 4, in which the positioning is allowed between the fastening elements 12 and 13 of the food products 9 that have to be inserted between the grilles 4 and 5, and a mutually closer position, illustrated, in particular, in Figure 10, in which the food products 9 are fastened between the two fastening elements 12 and 13.

In more specific detail, the base frame 2 defines, at the positioning region 3, a supporting surface 2a upon which it is possible to rest one of the two grilles, for example the grille designated with 4.

Advantageously, the mutual spacing means 7 comprise, in general, a first locking assembly 14 and a second locking assembly 15, which are supported by the base frame 2 and are adapted to engage, respectively, the grilles 4 and 5 arranged in the positioning region 3, as well as means 18 for the translational actuation of the second locking assembly 15 with respect to the first locking assembly 14.

Conveniently, the first locking assembly 14 can be activated on command to reversibly lock the grille 4 arranged on the supporting surface 2a.

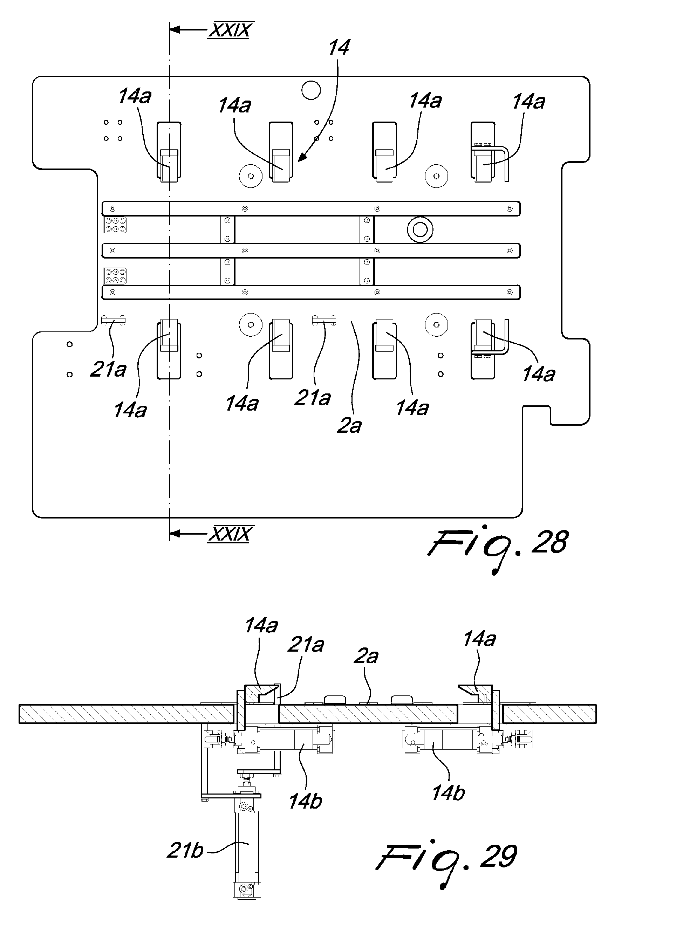

More specifically, as can be better seen in Figure 29, the first locking assembly 14 has, advantageously, a plurality of first hooks 14a, which are arranged on the supporting surface 2a and which can be actuated on command to pass from a retracted rest condition, in which they allow the operator to arrange the grille 4 on the supporting surface 2a, to an advanced working condition, in which they engage with the lateral edges of the grille 4 lying on the supporting surface 2a, and vice versa.

The actuation of the first hooks 14a from the retracted rest condition to the advanced working condition, and vice versa, can be, for example, implemented by means of respective movement cylinders 14b, which are mounted on the base frame 2 below the supporting surface 2a.

Conveniently, the second locking assembly 15 can be activated on command so as to reversibly hook the other grille 5 and is, advantageously, constituted by a plurality of second hooks 15a, which are supported by a supporting frame 16, mounted on the base frame 2, at the positioning region 3 of the grilles 4 and 5, and facing the supporting surface 2a.

In particular, the second hooks 15a can be moved, for example by means of respective activator cylinders 15b which are mounted on the supporting frame 16, to pass from a retracted disengagement condition, in which they can be positioned laterally to the lateral edges of the grille 5, to an advanced condition of engagement, in which they are adapted to engage the lateral edges of the grille 5.

Advantageously, the translational actuation means 18 can be activated on command so as to move the second locking assembly 15, with respect to the first locking assembly 14, along a direction that is substantially perpendicular to the supporting surface 2a and along two mutually opposite directions of movement.

In this way, by means of the activation of the translational actuation means 18 in one direction, it is possible to cause the spacing of the grille 5, locked by the second locking assembly 15, with respect to the grille 4, locked by the first locking assembly 14, and, by means of their activation in the other direction, it is possible to execute the approach of the second locking assembly 15 to the first locking assembly 14, in order to bring the two grilles 4 and 5 closer together or in order to execute the locking, by the first locking assembly 14 and by the second locking assembly 15, of a new pair of grilles arranged in the positioning region 3 in the closer condition.

Conveniently, the translational actuation means 18 can be constituted by an actuator cylinder 19, which is connected to the supporting frame 16 and which is supported by a member structure 20, extending from the base frame 2 above the supporting surface 2a.

In essence, by means of the activation of the actuator cylinder 19, the supporting frame 16 can be moved, with respect to the supporting surface 2a, from a lowered position, in which, with the grilles 4 and 5 deposited in the positioning region 3 in the closer condition, the second hooks 15a carried by the supporting frame 16 are able to engage the grille 5, and a raised position, in which, with the grille 5 engaged by the second hooks 15a, the two grilles 4 and 5 are brought to the spaced condition.

Conveniently, the second locking assembly 15 can be provided with one or more sensors 17, which are associated, for example, with the supporting frame 16, which are able to detect the position of the second locking assembly 15 with respect to the first locking assembly 14 and to command the arrest of the translational actuation means 18, as a function of the position reached by the second locking assembly 15.

There are, furthermore, substantially at the positioning region 3 of the grilles 4 and 5, retention means, which can be activated on command in order to retain the food products 9 that have been brought by the grip means 10 between the grilles 4 and 5 in the spaced condition, when the grip means 10 pass from the insertion position to the loading position.

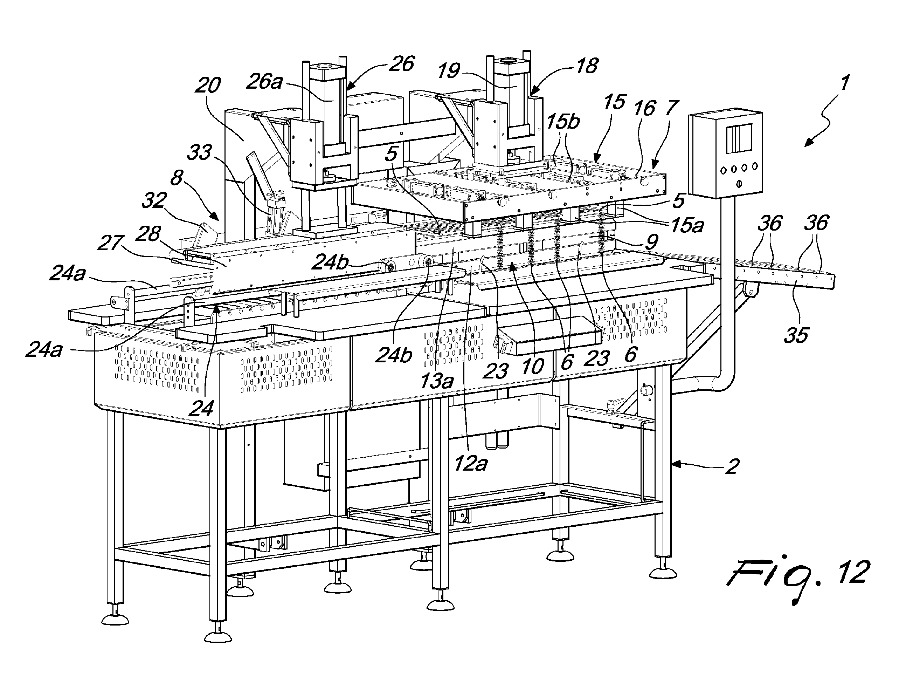

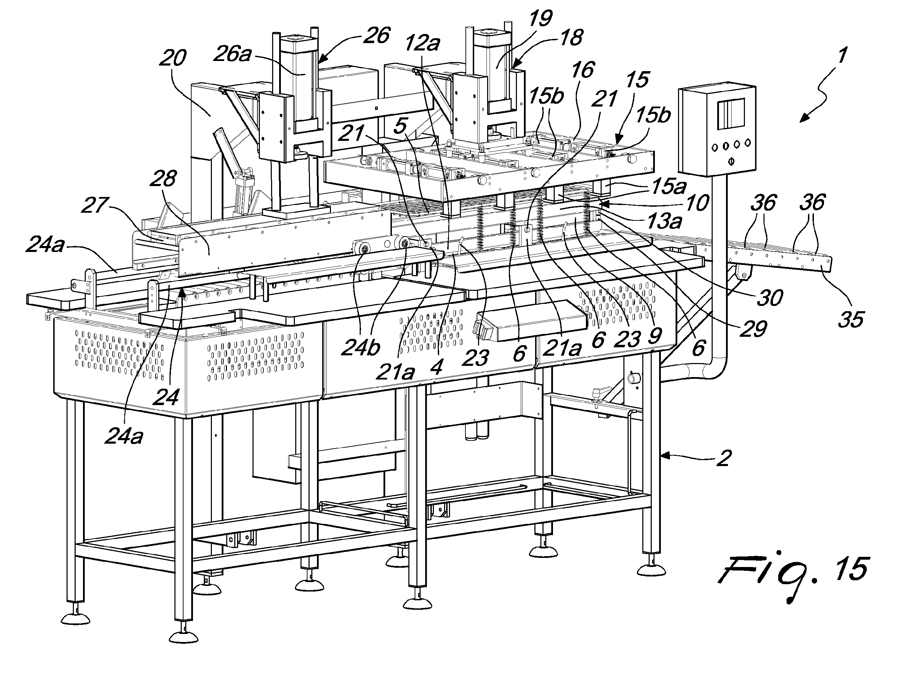

Conveniently, these retention means are implemented by one or more retention bars 21, which are movable axially, along a direction that is substantially perpendicular to the direction of translational motion of the grip means 10, between an inactive position, which is occupied by the retention bars 21 during the passage of the grip means 10 from the loading position to the insertion position, as shown, for example, in Figure 12, and an active position, which is occupied by the retention bars 21 during the passage of the grip means 10 from the insertion position to the loading position and which is shown, in particular, in Figure 15.

More specifically, in their inactive position, the retention bars 21 are arranged laterally to the positioning region 3, so as not to hamper the insertion, between the grilles 4, 5 in the spaced condition, of the food product 9, by the grip means 10, whereas, in their active position, the retention bars 21 are arranged, with respect to the direction of movement of the grip means 10 from the loading position to the insertion position, to the rear of a respective food product 9, which is inserted between the grilles 4 and 5 by the grip means 10, in such a way as to prevent the entrainment of the food product 9, by the grip means 10, when the grip means 10 are returned from the insertion position to the loading position.

The movement between the active position and the inactive position of each of the retention bars 21 is, conveniently, implemented by means of actuator cylinders 22, which are supported by the supporting frame 2.

Conveniently, there can also be engagement eyelets 21a that are arranged, with respect to the positioning region 3 of the grilles 4 and 5, on the opposite side from the actuator cylinders 22 of the retention bars 21, and each of which can be engaged by a respective retention bar 21, when the retention bar 21 is brought into its active position.

Optionally, the engagement eyelets 21a can be movable between an extracted position, in which they emerge from the supporting surface 2a so as to be able to engage the retention bars 21, and a retracted position, in which they are brought below the supporting surface 2a. The movement of the engagement eyelets 21a between the extracted position and the retracted position can be achieved by means of an activator cylinder 21b, which is mounted on the base frame 2 below the supporting surface 2a, as illustrated in Figure 29.

Advantageously, for facilitating the intervention of the mutual spacing means 7 on the grilles 4 and 5, there are means for retaining the grilles 4 and 5 in a mutually centered position, which, according to a very simple solution, can be implemented by means of a plurality of rod-like elements 23, which extend from at least two mutually opposite sides of one of the grilles (in the figures the one designated with 4), and which protrude toward the other grille 5 and outward, so as to engage mutually opposite lateral edges of the grille 5, thus keeping it centered with respect to the grille 4.

The fastening elements 12 and 13 that constitute the grip means 10 have, conveniently, an elongated shape, so as to enable the operator to arrange a plurality of food products 9 in a line along the longitudinal extension of the fastening elements 12 and 13.

Preferably, the fastening elements 12 and 13 are, respectively, implemented by a lower shell 12a and an upper shell 13a.

Conveniently, the lower shell 12a has a concavity that is directed upward, so as to be able to easily receive the food products 9 that are arranged on the grip means.

Advantageously, the lower shell 12a is mounted so that it can slide on linear guides 24, which are formed on the base frame 2 and which extend laterally with respect to the positioning region 3 of the grilles 4 and 5.

For example, the linear guides 24 are constituted by at least one guide rod 24a upon which the lower shell 12a rests by means of the interposition of sliding wheels 24b, mounted so that they can rotate on the lower shell 12a itself.

Conveniently, operating on the lower shell 12a there is a command cylinder 25, which makes it possible to execute the movement of the lower shell 12a along the linear guides 24.

The upper shell 13a is arranged above the lower shell 12a and can have, conveniently, a concavity that is directed downward.

In particular, the upper shell 13a can be moved, by actuator means 26, toward or away from the lower shell 12a, so as to be able to pass, once the grip means 10 are arranged in the loading position, between a raised condition, in which it allows the operator to lay, on the bottom of the lower shell 12a, the food products 9 that have to be inserted between the grilles 4 and 5, and a lowered condition, in which the food products 9 arranged by the operator on the lower shell 12a are fastened between the lower shell 12a and the upper shell 13a, so as to subsequently enable their insertion between the grilles 4 and 5.

As illustrated, the upper shell 13a is, conveniently, mounted, by means of linear sliding guides 27, on a support 28, which is connected to the base frame 2 with the help of the actuator means 26. More specifically, the actuator means 26 are, advantageously, constituted by a movement and compression cylinder 26a, operating between the support 28 and the member structure 20.

Advantageously, there are mutual fastening means between the lower shell 12a and the upper shell 13a, which are adapted to intervene, when the upper shell 13a is brought to the lowered condition, in such a way that the upper shell 13a is integral with the lower shell 12a, in its sliding movement along the linear guides 24, under the action of the command cylinder 25.

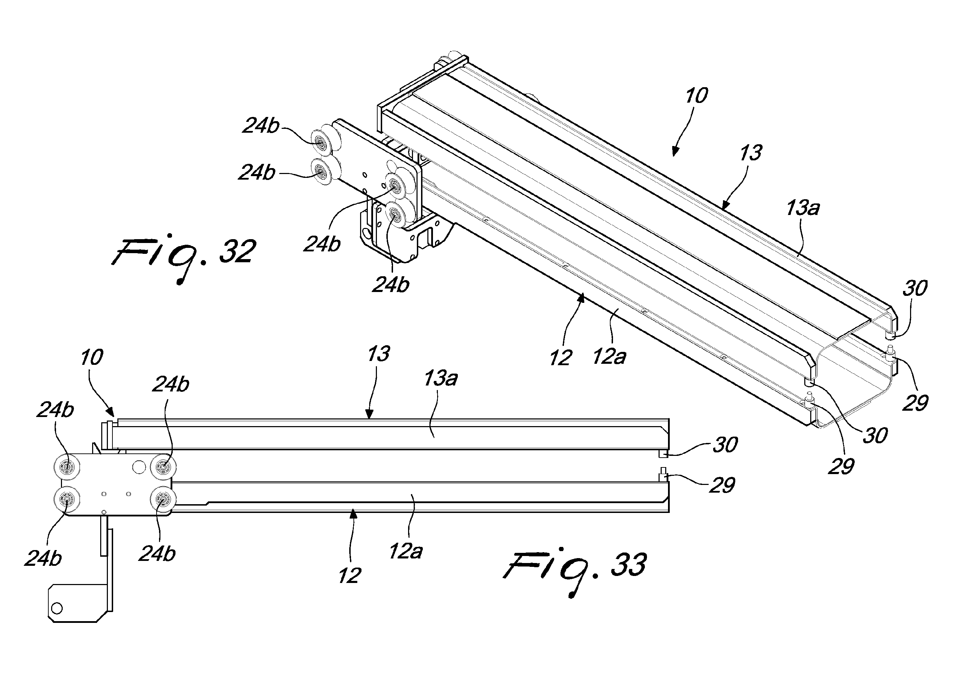

Conveniently, as shown, in particular, in Figures 32 and 33, these mutual fastening means are constituted by centering pins 29, which are carried, for example, by the lower shell 12a substantially at its front end, in the direction of movement from the loading position to the insertion position of the grip means 10.

These centering pins 29 are designed to be inserted in locator sleeves 30, which are arranged in the front part of the upper shell 13a, when the upper shell 13a is brought to the lowered condition with respect to the lower shell 12a.

Advantageously, in a position next to the loading position of the grip means 10, there are movable walls 32 that are mounted on the supporting frame 2 so that they can rotate about a common rotation pin 31, the movable walls 32 being arranged mutually spaced apart along a direction that is substantially parallel to the longitudinal extension of the lower shell 12a.

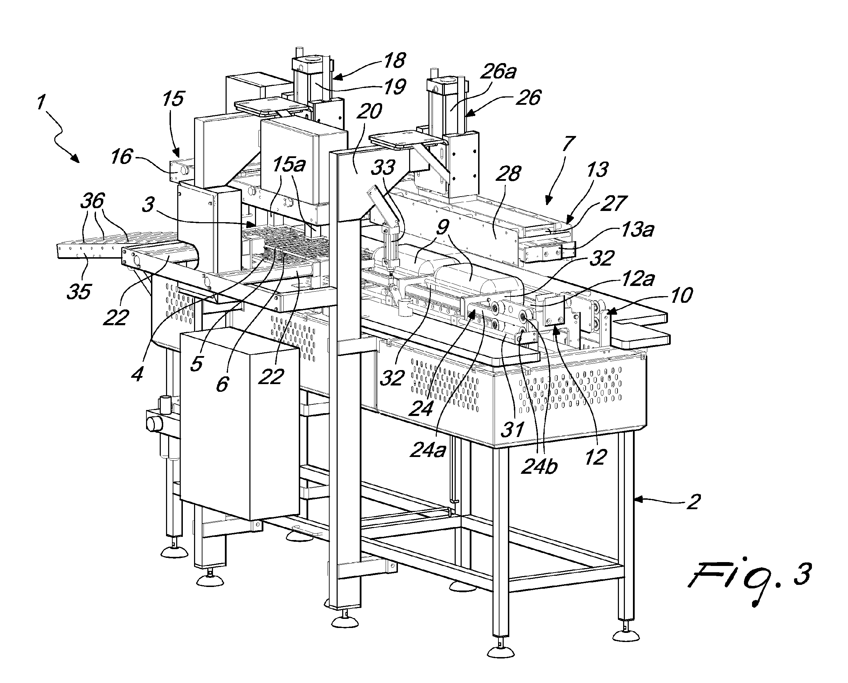

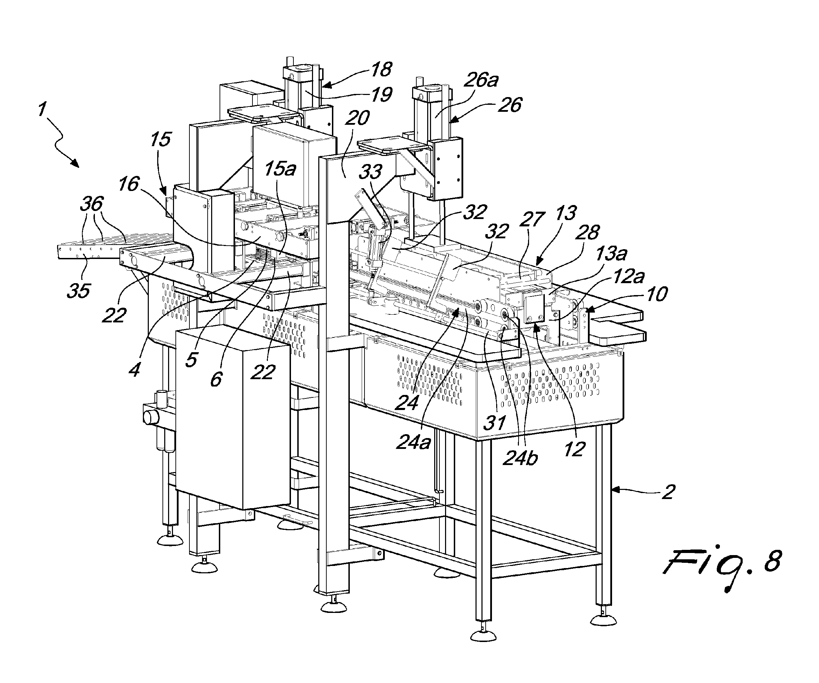

In particular, with the grip means 10 in the loading position and with the upper shell 13a in the raised condition with respect to the lower shell 12a, the movable walls 32 can be brought, by means of their rotation about the rotation pin 31, from a condition of non-use, shown, in particular, in Figure 8, in which they are arranged outside the lower shell 12a, to a condition of use, shown, in particular, in Figure 3, in which they are positioned inside the lower shell 12a, so that they delimit compartments for the loading of the food products 9 which enable the operator to correctly position the food products 9 on the lower shell 12a, leaving between them the necessary space for the insertion of the retention bars 21, when the grip means 10 are brought to the insertion position.

The rotation of the movable walls 32 can optionally be automatically commanded by means of an actuator cylinder 33, which is eccentrically connected to the rotation pin 31 and supported by the member structure 20.

Conveniently, the machine according to the invention is also provided with means for moving the grilles 4 and 5, which are adapted to bring the grilles 4 and 5 downstream of the positioning region 3, once the food products 9 have been inserted between the grilles 4 and 5.

These movement means can, for example, comprise a thrust element, operating from a lateral position, with respect to the positioning region 3 of the grilles 4 and 5, and a transport surface 35, which is for example inclined with respect to the horizontal and provided with pulling rollers 36, and which extends from the opposite end to the thrust element, with respect to the positioning region 3 of the grilles 4 and 5.

The thrust element can for example be implemented by means of the lower and upper shells 12a and 13a themselves, by having the upper shell 13a in the lowered condition and activating the command cylinder 25 of the lower shell 13 a.

The machine can be, optionally, completed by having automatic extraction means that automatically extract one or more food products, from those previously inserted, from the grilles 4 and 5, once these food products have been adequately seasoned or cooked.

These automatic extraction means can be, for example, constituted by a pusher, not shown, which is mounted on the base frame 2 and can be activated on command so as to push the food products to be extracted from the grilles 4 and 5, after the grilles 4 and 5 have been brought to the spaced condition by the mutual spacing means 7.

The operation of the machine is as follows.

With the first hooks 14a are in the retracted rest condition, the retention bars 21 in the inactive condition, the supporting frame 16 in the raised position and the second hooks 15a in the retracted disengagement condition, the grilles 4 and 5 are arranged, in the positioning region 3, in the closer condition, owing to the action of the springs 6, thus laying the grille 4 on the supporting surface 2a.

At this point, the grille 4 is locked by the first locking assembly 14.

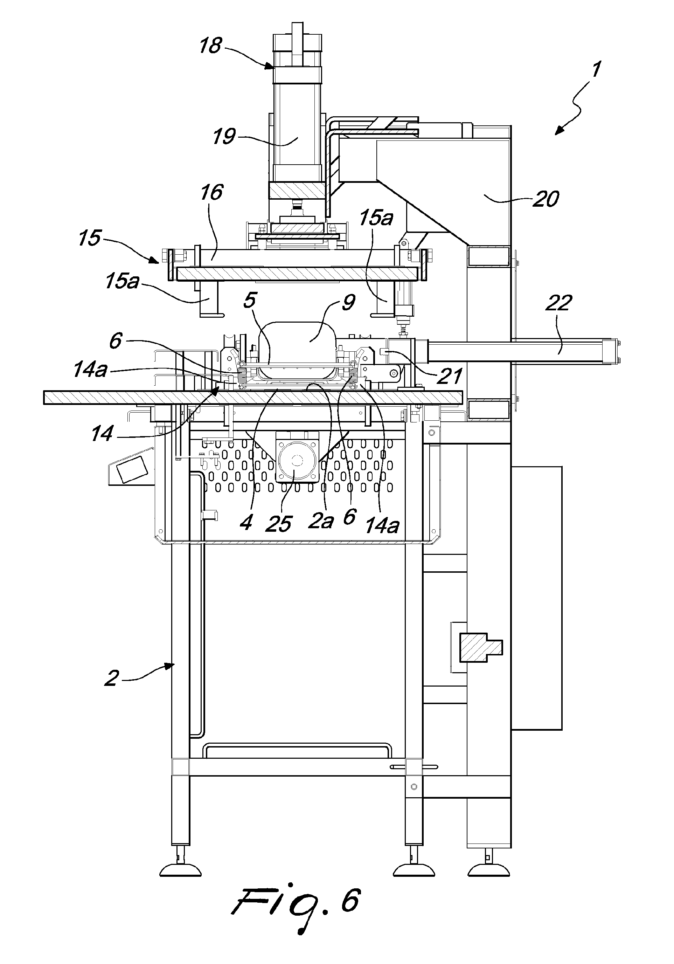

More specifically, as shown, for example, in Figure 6, by means of the activation of the movement cylinders 14b, the first hooks 14a are brought to the advanced working condition, so that they engage with the lateral edges of the grille 4, thus locking the grille 4 to the supporting surface 2a.

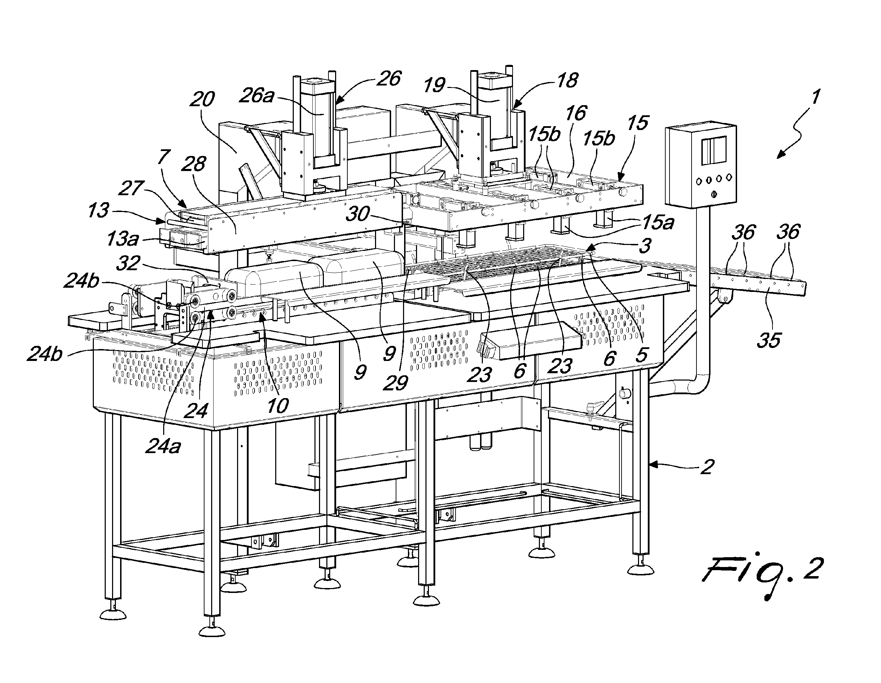

With specific reference to Figures 1, 2 and 3, with the grip means 10 in the loading position and with the lower shell 13a in the raised condition, the actuator cylinder 33 is actuated so as to bring the movable walls 32 from their condition of non-use to their condition of use.

In this situation, the operator proceeds to deposit one or more food products 9 on the bottom of the lower shell 12a, using the movable walls 32 in order to separate the various food products 9 from each other.

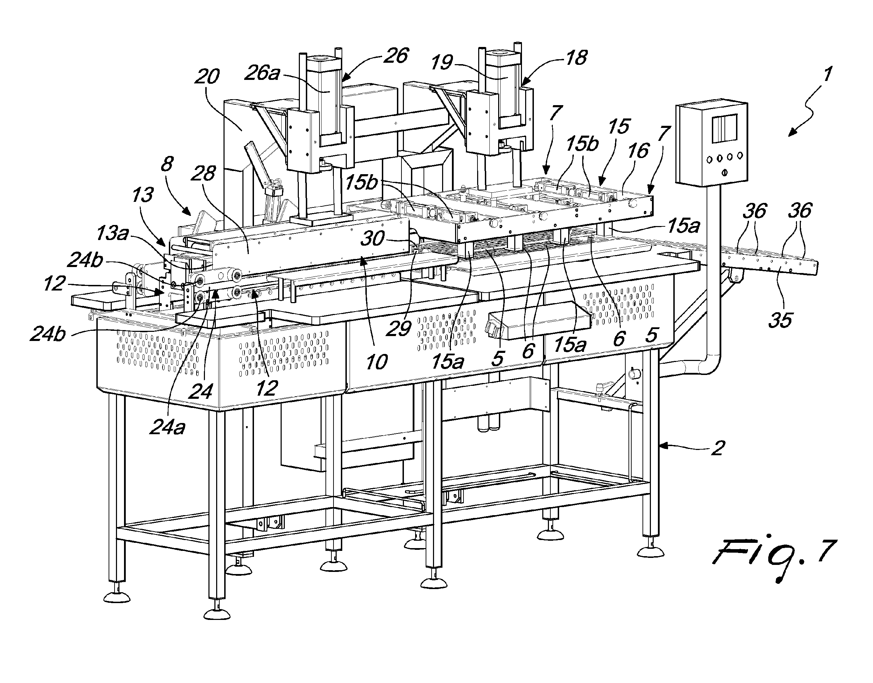

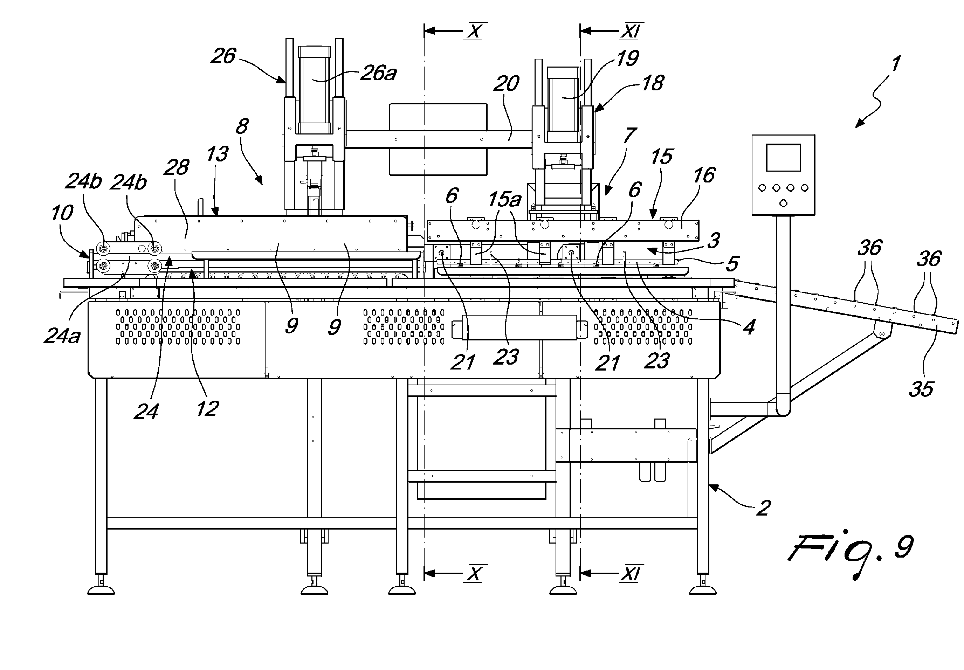

As shown, in particular, in Figures 7, 8 and 9, after having brought the movable walls 32 back to the condition of non-use by means of the activation of the actuator cylinder 33, the upper shell 13a is, subsequently, brought to the lowered condition, by means of the activation of the movement and compression cylinder 26a, so that the food products 9 are fastened between the lower shell 12a and the upper shell 13a and so that the centering pins 29 are inserted in the locator sleeves 30, thus making the upper shell 13a integral in translational motion with the lower shell 12a.

As also shown in Figures 7, 8 and 9, the second locking assembly 15 is also actuated so as to execute the locking of the other grille 5 as well.

In order to do this, first the translational actuation means 18 are activated so as to make the locking assembly 15 approach the grille 5.

More specifically, the actuator cylinder 19 is activated, so as to bring the supporting frame 16 to its lowered position, in which it is just above the grille 5.

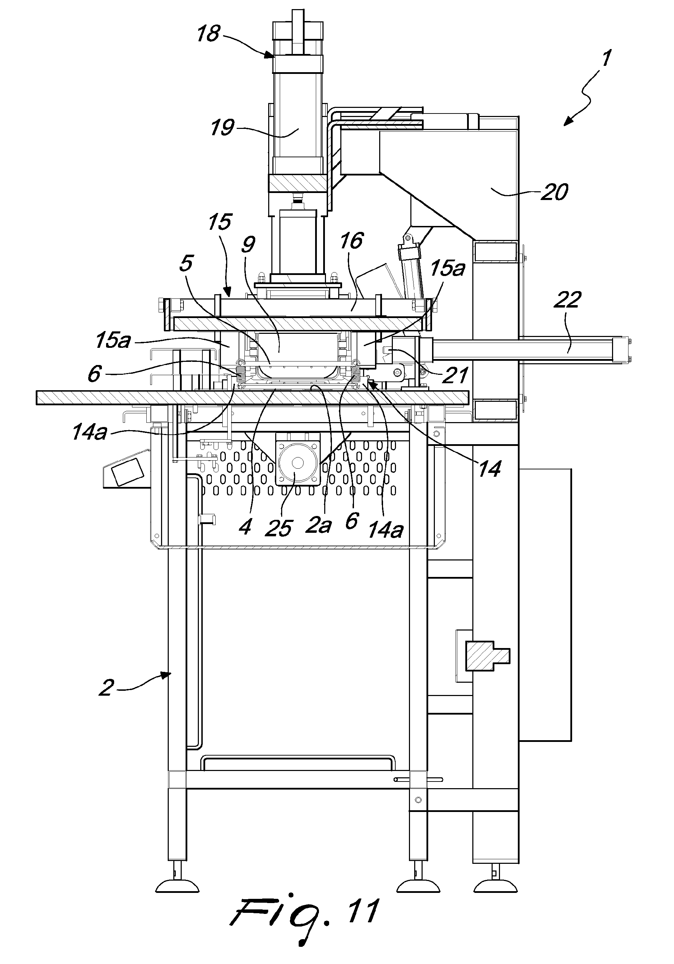

As shown, in particular, in Figure 11, once the supporting frame 16 has reached the lowered position, the second hooks 15a are subsequently brought, by the respective activator cylinders 15b, to the advanced condition of engagement, so that the second hooks 15a engage the lateral edges of the grille 5, so as to lock it with respect to the supporting frame 16.

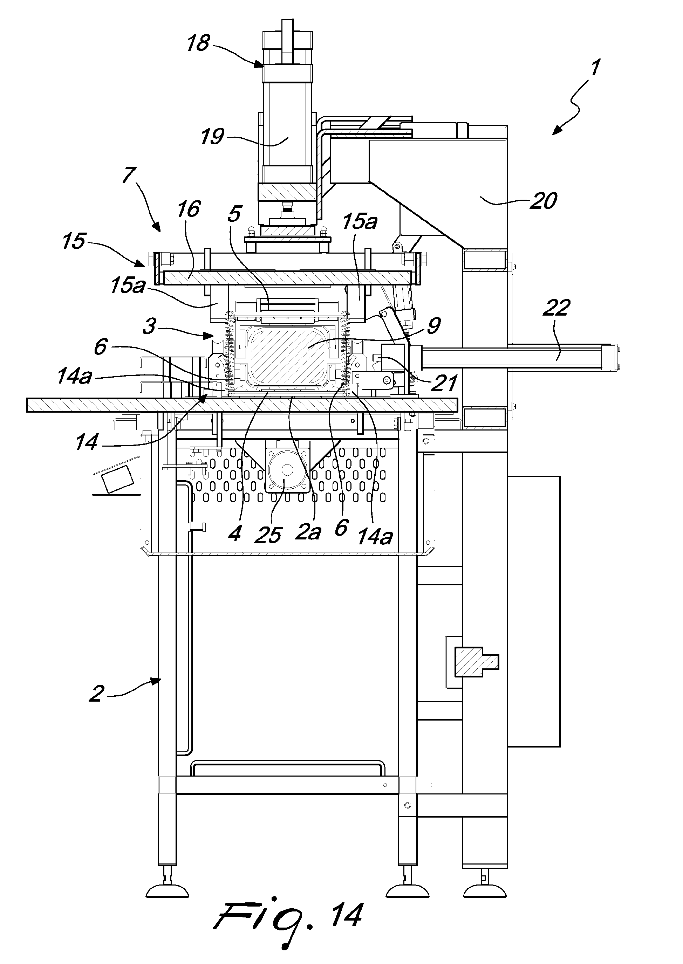

With reference to Figures 12, 13 and 14, the translational actuation means 18 are then actuated, so as to cause the spacing of the second locking assembly 15 from the first locking assembly 14.

More specifically, the actuator cylinder 19 is activated so as to bring the supporting frame 16 from the lowered position to the raised position, thus achieving the passage of the grilles 4 and 5 from their closer condition to their spaced condition, in contrast with the action of the springs 6.

Subsequently, as also shown in Figures 12, 13 and 14, the command cylinder 25 moves the lower shell 12a, and the upper shell 13a which is integral with it, along the linear guides 24, so as to bring the grip means 10 from the loading position to the insertion position.

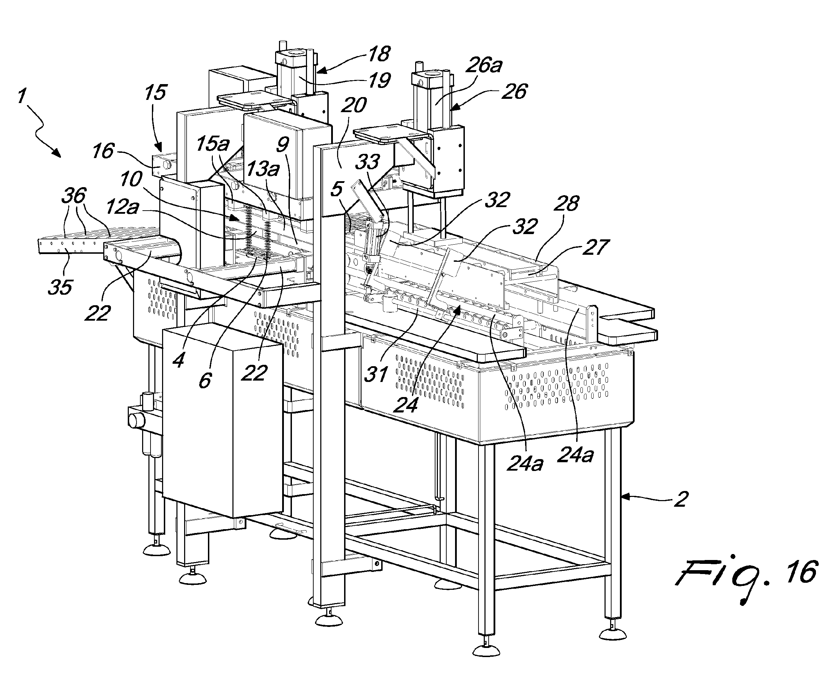

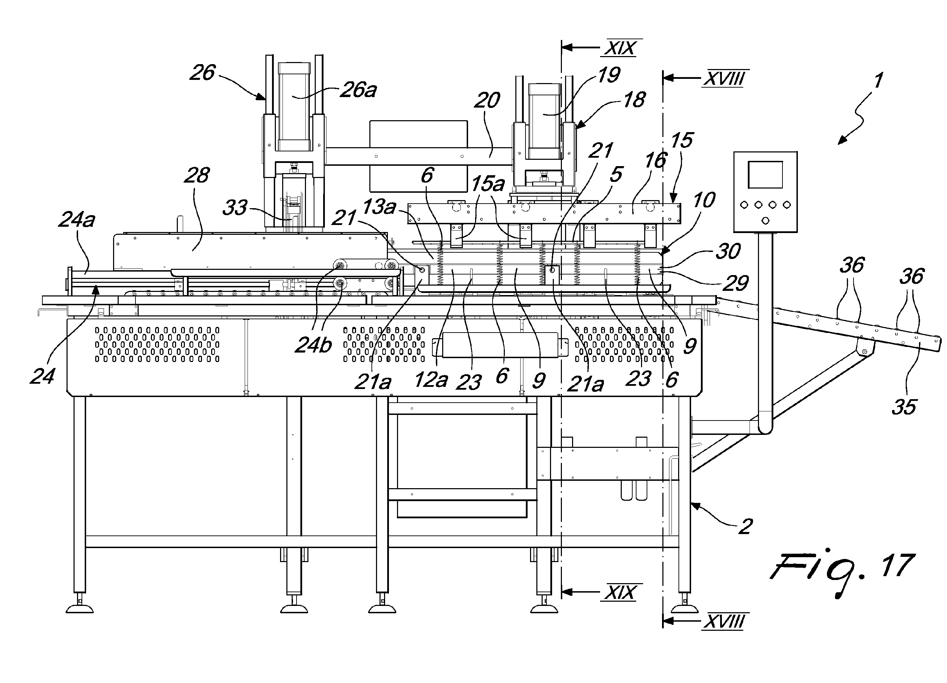

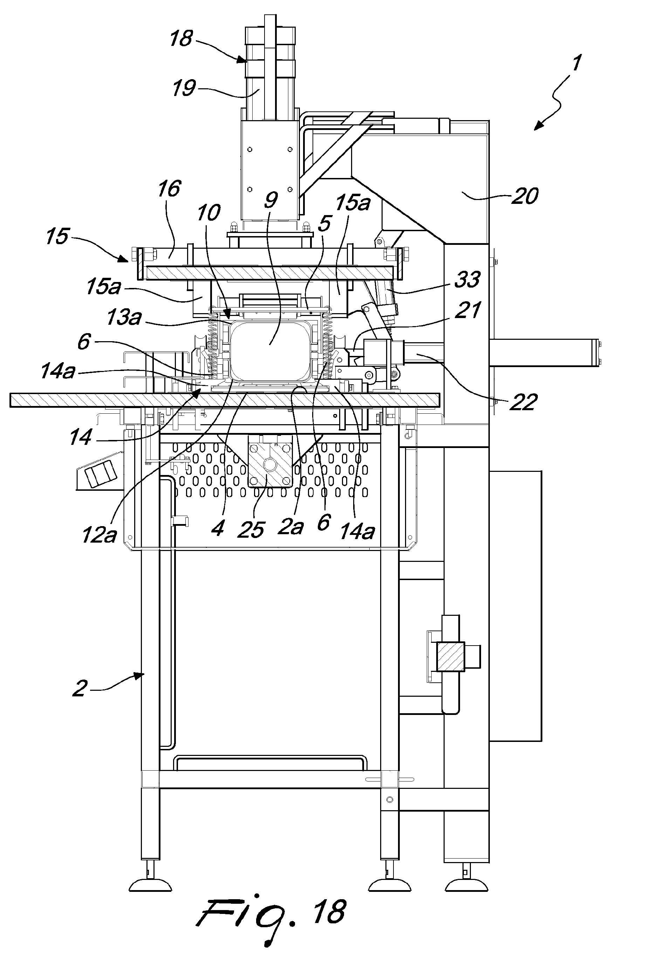

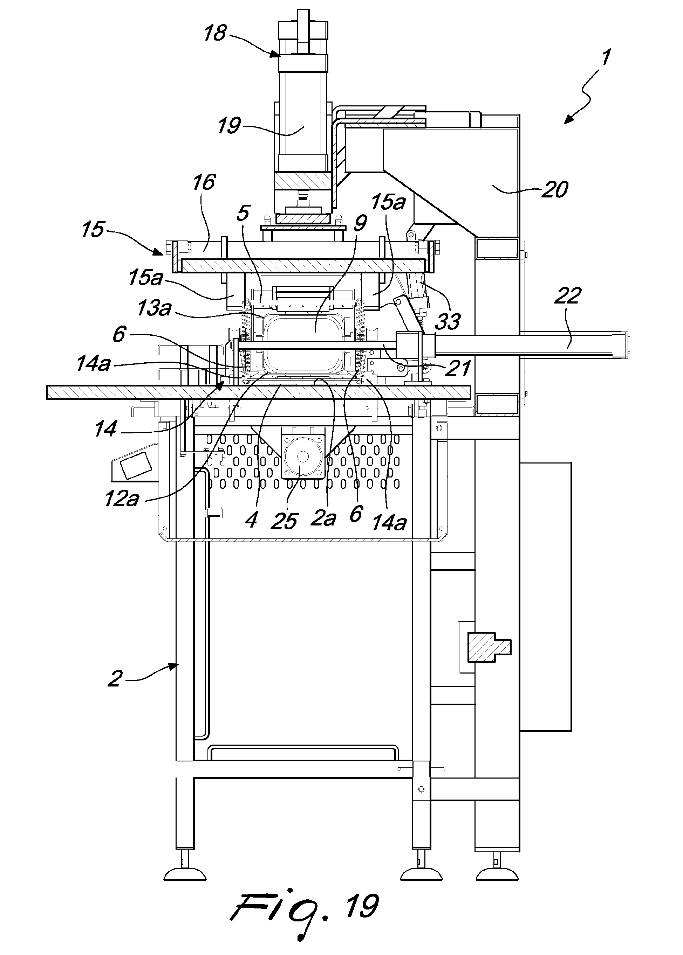

As shown, in particular, in Figures 15 to 19, once the grip means 10 are moved to the insertion position, the actuator cylinders 22 command the movement of the retention bars 21 from the inactive position to the active position, so that the retention bars 21 are positioned to the rear of a respective food product 9 with respect to the direction of movement of the grip means 10 from the loading position to the insertion position.

At this point, the command cylinder 25 is activated again so as to bring the grip means 10 back to the loading position, by making the lower shell 12a, with the upper shell 13a attached, slide along the linear guides 24.

The engagement of the food products 9 against the retention bars 21 ensures that the lower shell 12a and the upper shell 13a can slide on the food products 9, without pulling them along with them in their movement toward the loading position of the grip means 10.

It should be noted that the passing of the grip means 10 from the insertion position to the loading position occurs, conveniently, in successive steps, with the purpose of preventing the centering pins 29 from colliding with the retention bars 21 in the active position, while at the same time ensuring that the retention bars 21 keep the food products 9 locked in position for the longest time possible.

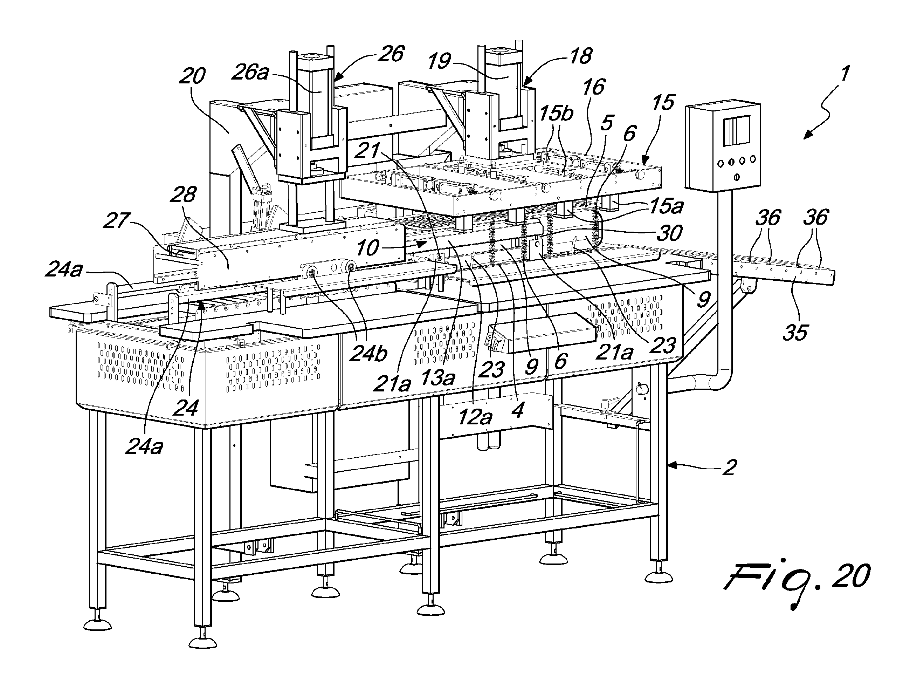

More precisely, as shown in Figure 20, in a first step, the grip means 10 execute a partial retraction from the insertion position toward the loading position, and they are stopped just before the centering pins 29 come into contact with the first retention bar 21 that they encounter, during the passage of the grip means 10 from the insertion position to the loading position.

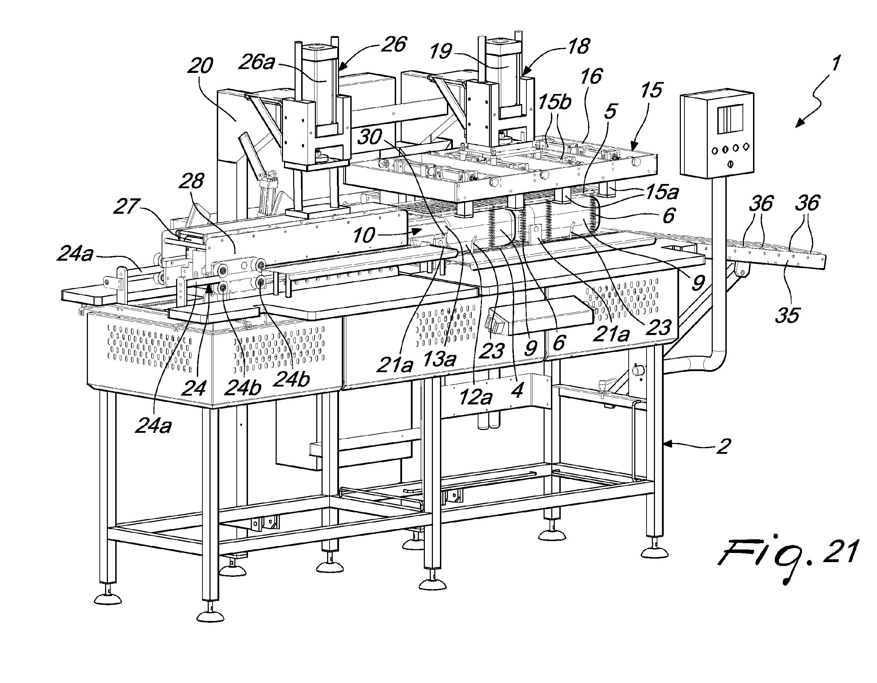

As shown in Figure 21, after having brought the first retention bar 21 encountered back to the inactive position, the grip means 10 continue their movement toward the loading position, taking a further step in the direction of the loading position and stopping the centering pins 29 in proximity to the second retention bar 21 encountered, which is then brought back to the inactive position, so as to enable the grip means 10 to continue their movement toward the loading position once again.

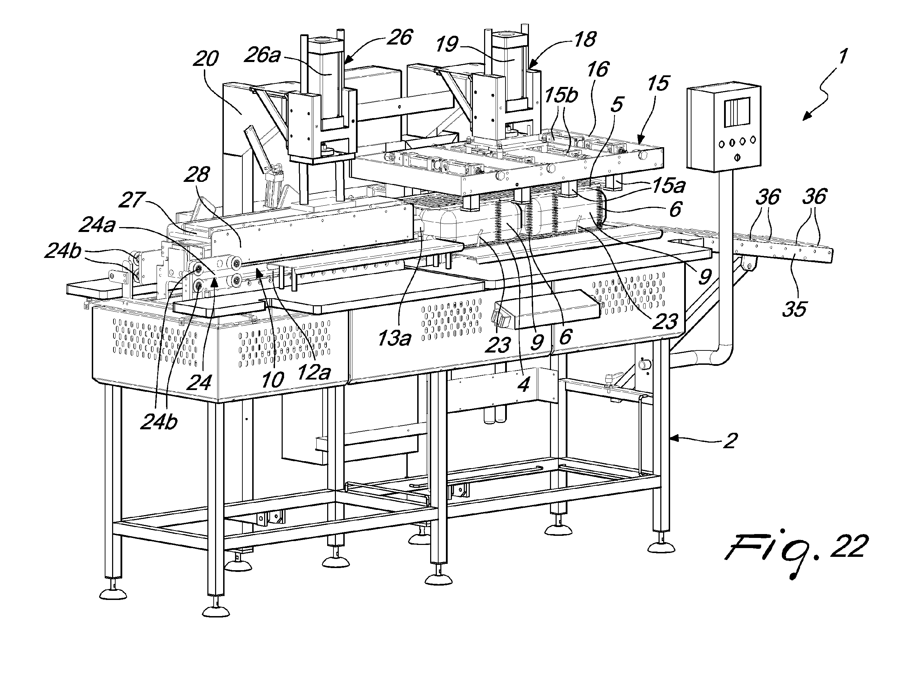

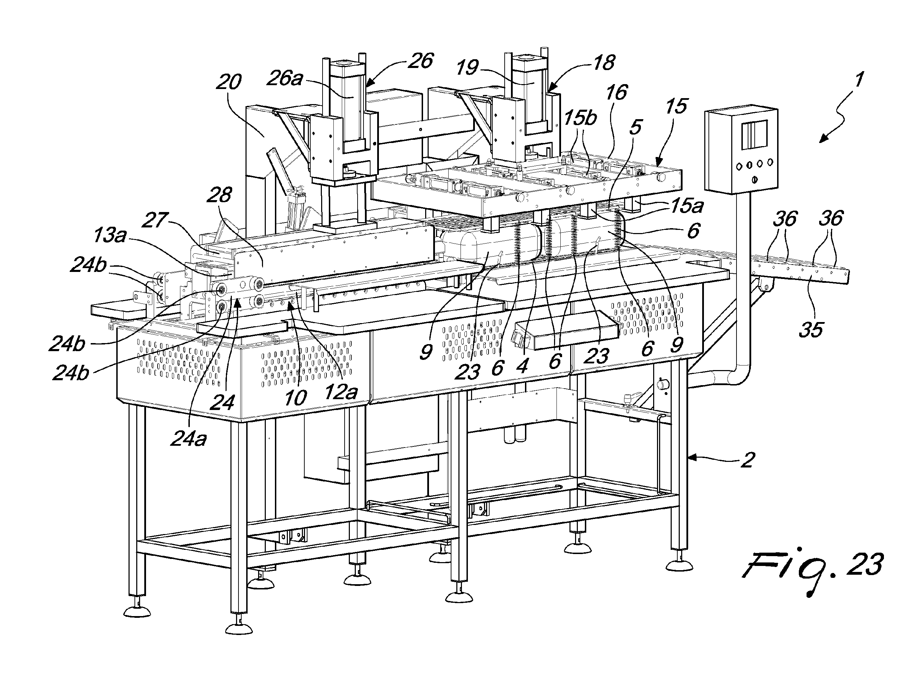

With reference to Figures 22 and 23, once the grip means 10 have been brought back to the loading position, the supporting frame 16 is lowered, by means of the activation of the actuator cylinder 19, until the grille 5 is brought to rest on the food products 9. When the sensors 17 detect the position of the supporting frame 16 in which the grille 5 touches the food products 9, the descent of the supporting frame 16 is stopped.

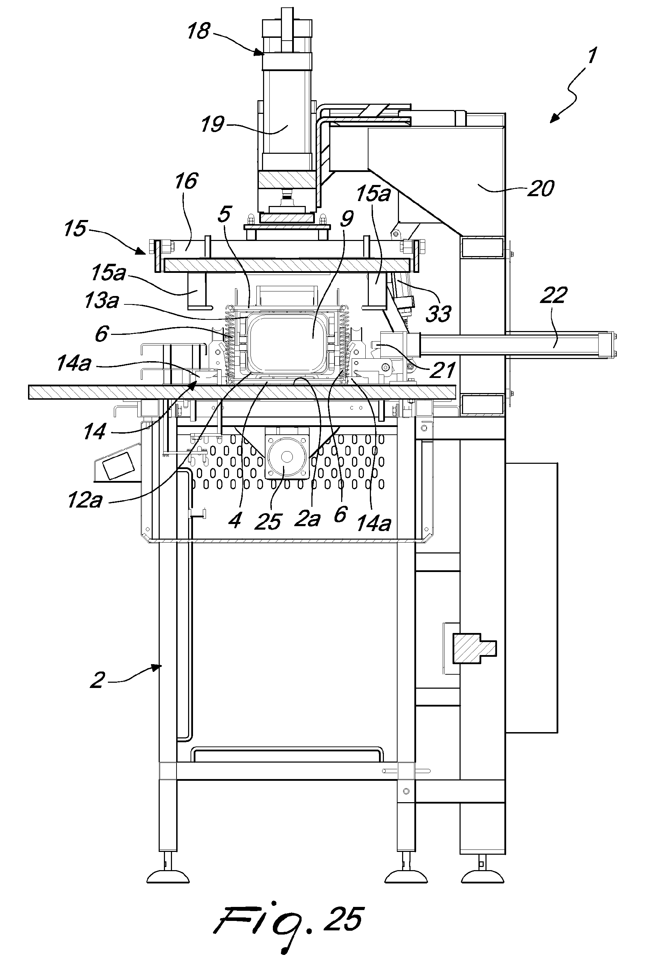

At this point, as shown in Figure 25, the activator cylinders 15b bring the second hooks 15a from the advanced condition of engagement to the retracted disengagement condition, so as to free the grille 5 from being locked by the second hooks 15a.

As can also be seen in Figure 25, after the activation of the movement cylinders 14b, the first hooks 14a are brought back to the retracted rest condition, thus freeing the grille 4 from being locked by the first hooks 14a.

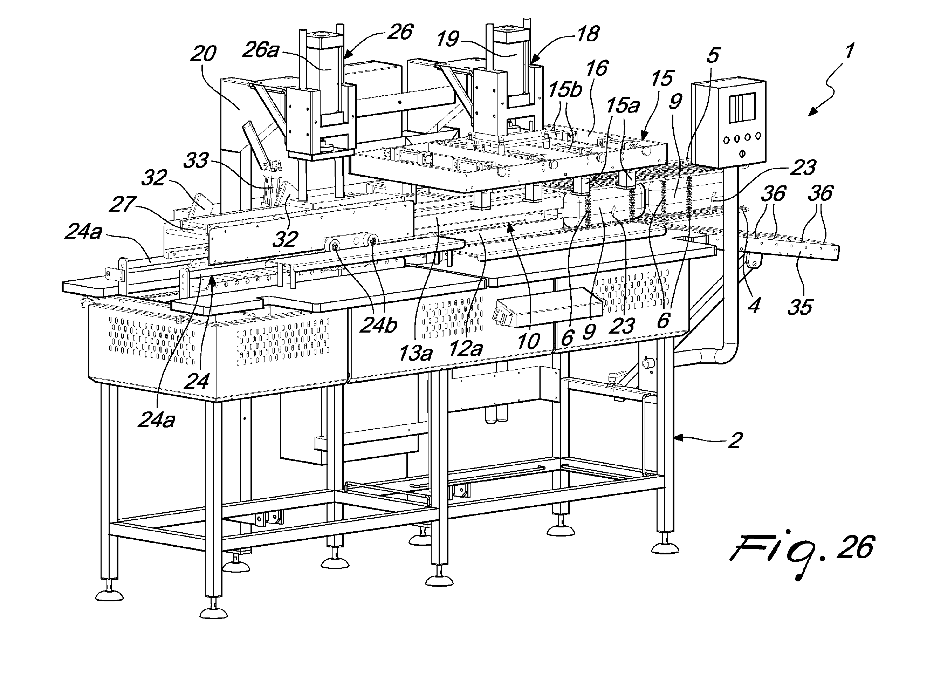

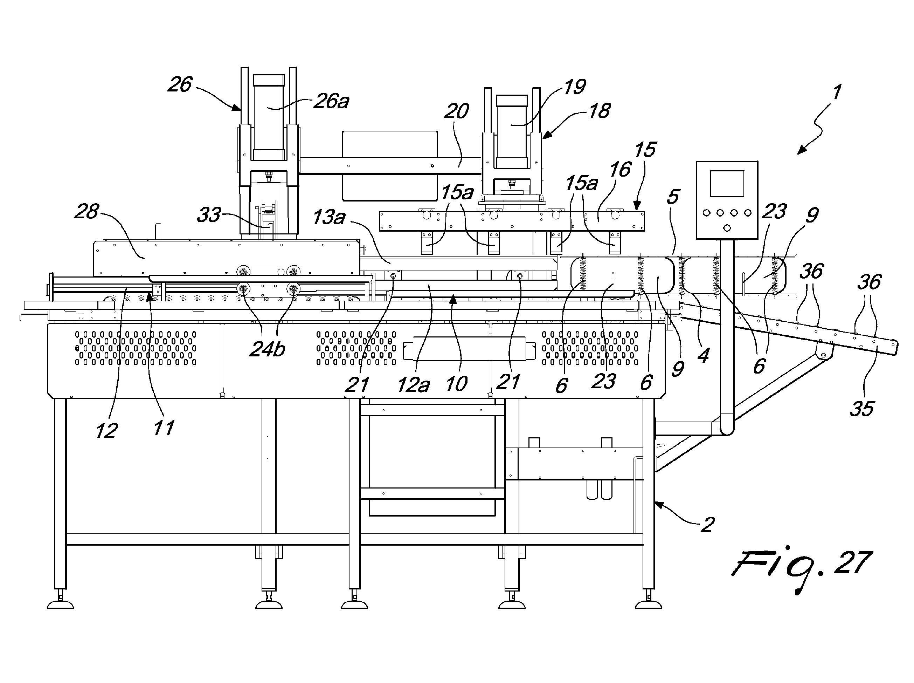

With reference to Figures 26 and 27, by means of the activation of the command cylinder 25, the lower shell 12a and the upper shell 13a are once again moved along the linear guides 24 in the direction of the grilles 4 and 5, so as to push the grilles 4 and 5, with the food products 9 inserted between them, toward the transport surface 35, from which they can subsequently be removed, in order to be hung from suitable supports, on which the food products 9 are left to be seasoned, or in order to send the food products 9 inserted between them to a cooking step.

Once the food products 9 that have been inserted between the grilles 4 and 5 have reached the desired degree of seasoning or have been sufficiently cooked, the grilles 4 and 5, with the products inserted between them, are deposited in the positioning region 3, resting the grille 4 on the supporting surface 2a.

The movement cylinders 14b are then activated, so as to bring the first hooks 14a from the retracted rest condition to the advanced working condition, as a consequence of locking the grille 4 to the supporting surface 2a.

The supporting frame 16 is brought by the actuator cylinder 19 to its lowered position and, subsequently, the activator cylinders 15b are activated to bring the second hooks 15a from the retracted disengagement condition to the advanced condition of engagement, so as to lock the grille 5 to the supporting frame 16 by means of the second hooks 15a.

Subsequently, the actuator cylinder 19 actuates the supporting frame 16 so as to bring it to the raised position, with consequent passage of the grilles 4 and 5 from the closer condition to the spaced condition.

At this point, the food products 9 can be removed by means of the activation of the pusher, not shown, which makes it possible to exert a thrust on the food products 9, so as to remove them from the grilles 4 and 5.

Once the food products 9 have been removed from the two grilles 4, 5, the second locking assembly 15 is moved by the translational actuation means 18 in the direction of the first locking assembly 14 and, more specifically, the actuator cylinder 19 is activated so as to lower the supporting frame 16 with respect to the supporting surface 2a, thus bringing the grilles 4 and 5 back from the spaced condition to the closer condition.

Subsequently, by means of the actuation of the movement cylinders 14b, the first hooks 14a are brought back to the retracted rest condition and, by means of the actuation of the activator cylinders 15b, the second hooks 15a are brought back to the retracted disengagement condition, thus freeing the grille 4 and the grille 5 from being locked by the first hooks 14a and by the second hooks 15a.

At this point, the second locking assembly 15 is moved away from the first locking assembly 14 by means of the activation of the translational actuation means 18 and, more specifically, after the activation of the actuator cylinder 19, the supporting frame 16 is brought to its raised position with respect to the supporting surface 2a, so as to allow the removal of the grilles 4 and 5.

From the foregoing it can be seen that the invention fully achieves the set aim and objects.

In particular, it should be noted that the machine makes it possible to mutually, and very easily, move two grilles for the compression of food products to be seasoned or cooked away from each other, without needing to resort to the unhooking of the springs that join the two grilles.

Furthermore, it should be pointed out that the machine makes it possible to automate both the step of insertion and the step of removal of the food products from the compression grilles.

All the characteristics of the invention, indicated above as advantageous, advisable or similar, may also be missing or be substituted by equivalent characteristics.

The individual characteristics set out with reference to general teachings or to specific embodiments may all be present in other embodiments or may substitute characteristics in such embodiments.

The invention, thus conceived, is susceptible of numerous modifications and variations, all of which are within the scope of the appended claims.

## Claims

1. Compression grilles (4, 5) for a machine for inserting or removing food products between said compression grilles (4, 5), comprising at least one pair of grilles (4, 5) which are arranged facing each other **characterized in that** said grilles are mutually connected by elastic compression means (6), said pair of grilles (4, 5) being movable by mutual spacing means (7) from a closer condition to a spaced condition in contrast with said elastic compression means (6), said pair of grilles (4, 5) comprising means for keeping said grilles (4, 5) in a mutually centered position during the intervention of said mutual spacing means (7), said means for keeping said grilles (4, 5) in a mutually centered position comprising a plurality of rod-like elements (23), which extend from at least two mutually opposite sides of one of the grilles (4) and which protrude toward the other grille (5) and outward, so as to engage mutually opposite lateral edges of the other grille (5), thus keeping it centered with respect to the one grille (4).

## Patentansprüche

1. Kompressionsgitter (4, 5) für eine Maschine zum Einführen oder Entfernen von Lebensmittelprodukten zwischen den Kompressionsgittern (4, 5) umfassend mindestens ein Paar von Gittern (4, 5), welche einander zugewandt angeordnet sind, **dadurch gekennzeichnet, dass** die Gitter miteinander durch elastische Kompressionsmittel (6) verbunden sind, wobei das Paar von Gittern (4, 5) durch gegenseitige Abstandsmittel (7) von einem benachbarten Zustand in einen beabstandeten Zustand entgegen der elastischen Kompressionsmittel (6) bewegbar sind, das Paar von Gittern (4, 5) umfaast Mittel zum Halten der Gitter (4, 5) in einer gegenseitigen zentrierten Position während des Eingreifens der gegenseitigen Abstandsmittel (7), die Mittel zum Halten der Gitter (4, 5) in einer gegenseitig zentrierten Position umfassen eine Vielzahl von stabähnlichen Elementen (23), welche sich von mindestens zwei gegenseitig entgegengesetzten Seiten eines der Gitter (4) erstrecken und welche zu dem anderen Gitter (5) und nach außen überstehen, um gegenseitig entgegengesetzte seitliche Kanten des anderen Gitters (5) in Eingriff zu nehmen, um dieses in Bezug auf das andere Gitter (4) zentriert zu halten.

## Revendications

1. Grilles de compression (4, 5) pour une machine pour insérer ou retirer des produits alimentaires entre lesdites grilles de compression (4, 5), comprenant au moins une paire de grilles (4, 5) qui sont agencées l'une en face de l'autre, **caractérisés en ce que** lesdites grilles sont mutuellement reliées par des moyens de compression élastiques (6), ladite paire de grilles (4, 5) pouvant être déplacée par des moyens d'espacement mutuel (7) d'un état rapproché à un état espacé en opposition auxdits moyens de compression élastiques (6), ladite paire de grilles (4, 5) comprenant des moyens pour maintenir lesdites grilles (4, 5) dans une position mutuellement centrée pendant l'intervention desdits moyens d'espacement mutuel (7), lesdits moyens pour maintenir lesdites grilles (4, 5) dans une position mutuellement centrée comprenant une pluralité d'éléments analogues à des tiges (23), qui s'étendent à partir d'au moins deux côtés mutuellement opposés de l'une des grilles (4) et qui font saillie vers l'autre grille (5) et vers l'extérieur, de manière à s'engager avec des bords latéraux mutuellement opposés de l'autre grille (5), en la maintenant ainsi centrée par rapport à la grille (4).
